# FASCICULE DE BREVET EUROPEEN

(11) **EP 3 105 494 B1**
(45) Date de publication et mention de la délivrance du brevet: **22.05.2019**
(21) Numéro de dépôt: 15706884.2
(22) Date de dépôt: 03.02.2015
(51) Int. Cl.: F17C 13/00, F25J 3/04

(54) **ENCEINTE ISOLÉE ET PROCÉDÉ DE BALAYAGE D'UNE TELLE ENCEINTE**
ISOLIERTE KAMMER UND VERFAHREN ZUM SPÜLEN SOLCH EINER KAMMER
INSULATED CHAMBER AND METHOD FOR FLUSHING SUCH A CHAMBER

(30) Priorité: 11.02.2014 FR 1451026
(43) Date de publication de la demande: 21.12.2016
(73) Titulaire: L'Air Liquide Société Anonyme pour l'Etude et l'Exploitation des Procédés Georges Claude, 75007 Paris (FR)
(72) Inventeur: CAVAGNE, Patrice, F-94170 Le Perreux Sur Marne (FR); CRAYSSAC, Frédéric, F-78140 Velizy (FR)
(74) Mandataire: Mercey, Fiona Susan
(86) Numéro de dépôt international: PCT/FR2015/050242
(87) Numéro de publication internationale: WO 2015/121562

(56) Documents cités:
- EP-A1- 1 520 079
- EP-A1- 2 503 269
- DE-A1-102006 028 313
- FR-A1- 2 509 839
- FR-A1- 2 832 211
- US-A- 4 662 921

## Description

La présente invention est relative à une enceinte isolée, en particulier à une enceinte isolée au moyen d'un isolant solide, opérant à température subambiante ou cryogénique. Elle concerne également un procédé de balayage d'une telle enceinte.

Les unités de séparation d'air disposent d'un système isolant permettant de limiter les échanges de chaleur entre le milieu extérieur et les différents équipements industriels tels que les colonnes et échangeurs. Ce système isolant utilise en général un (ou plusieurs) matériau(x) isolant(s) (perlite, laine de roche,...) contenu pour des raisons mécaniques, dans de grandes structures métalliques communément appelées boîtes froides (en anglais « cold box »). Ces enceintes ne sont pas étanches vis à vis de l'air extérieur et pour des raisons d'efficacité thermique et de sécurité, un débit continu d'azote gazeux assure un balayage à l'intérieur de ces boîtes froides.

US-A-4662921 et FR-A-2509839 montrent qu'il est connu d'envoyer l'azote dans une ouverture dans le toit de l'enceinte, de sorte que l'azote traverse librement l'isolant qui le remplit sans être canalisé par un tuyau. Ces dispositions ne permettent pas une bonne répartition de l'azote.

Comme illustré dans WO-A- 2004015347, il est connu d'envoyer de l'azote gazeux provenant de la distillation dans l'isolant au moyen d'un distributeur placé au milieu de la masse d'isolant. Ceci ne permet pas non plus une distribution optimale du gaz inerte.

Pour maintenir une atmosphère sèche dans l'isolant d'une boîte froide, on utilise généralement de l'azote provenant du réseau de gaz inerte de l'usine, avec une teneur d'oxygène inférieur à 5%, en créant une légère surpression par rapport à la pression atmosphérique afin d'éviter toute entrée d'air humide dans l'isolant. Ce fluide doit être parfaitement sec et déshuilé. En effet, toute entrée d'humidité dans la boîte froide a pour conséquence de dégrader la performance thermique de l'isolant (perlite). De plus, une entrée d'air même sec, présente un risque de condensation d'air enrichie en oxygène dès lors que la température de l'isolant (à proximité de l'appareil cryogénique) est inférieure à la température de rosée de l'air. Ce phénomène peut ensuite présenter un risque d'inflammation et/ou d'explosion avec tout élément facilement inflammable dans de l'air enrichie.

Dans l'enveloppe principale de la boîte froide, il faut également assurer un renouvellement continu de l'atmosphère:
- pour évacuer l'air ambiant après ouverture et isolation.
- pour diluer et évacuer toute entrée d'air éventuelle.

Le débit horaire à prendre en compte pour l'inertage doit permettre de renouveler l'atmosphère de la boîte froide en 24 h environ, soit un débit horaire de 1/25 du volume total de la boîte.

Selon un objet de l'invention, il est prévu une enceinte isolée selon la revendication 1.

Selon d'autres aspects de l'invention :
- l'élément à isoler est un stockage
- l'élément à isoler est une colonne de distillation ou de lavage contenant des moyens permettant un échange de chaleur et de matière
- l'élément à isoler est un échangeur de chaleur
- l'élément à isoler est un vaporiseur-condenseur
- l'élément à isoler est un tuyau métallique
- l'élément à isoler est un filtre.
- les moyens pour injecter un gaz sont constitués par au moins un tuyau perforé rigide, de préférence en acier ou en aluminium.
- les moyens pour injecter le gaz sont disposés de sorte que le gaz rentre directement dans l'isolation de l'enceinte uniquement par le haut de l'enceinte
- le tuyau perforé comprend au plus une seule perforation par 50mm de longueur de tuyau, voire au plus une seule perforation par 100 mm de longueur de tuyau
- le tuyau perforé est entouré par un élément perméable pour empêcher l'entrée d'isolant par les perforations
- l'isolant est de la perlite
- au moins certains des moyens pour injecter le gaz sont constitués par au moins un tuyau poreux positionné verticalement à l'intérieur de l'enceinte, ayant une longueur égale à au moins la moitié de la hauteur de l'enceinte, voire ayant une longueur substantiellement égale à la hauteur de l'enceinte, le tuyau étant perforé, tout tuyau poreux étant disposé uniquement dans une partie de l'enceinte devant opérer à une température au-dessus d'un seuil, le seuil étant plus élevée que la température minimale de l'enceinte, le seuil pouvant être -100°C, voire -50°C.
- un tuyau poreux a une porosité d'au moins 5%
- le tuyau poreux est en polyéthylène ou en polyvinyle de chlorure ou en agglomérat de particules de caoutchouc
- certains des moyens pour injecter le gaz sont constitués par au moins un tuyau perforé rigide en métal et les moyens pour injecter le gaz composé d'au moins un tuyau perforé rigide sont disposés au moins dans une partie de l'enceinte devant opérer à une température en dessous du seuil.
- au moins certains des moyens pour injecter le gaz sont constitués par au moins trois tuyaux flexibles parallèles positionnés verticalement à l'intérieur de l'enceinte, ayant chacun une longueur égale à au moins la moitié de la hauteur de l'enceinte, voire ayant une longueur substantiellement égale à la hauteur de l'enceinte, le tuyau étant perforé, voire poreux.
- le tuyau flexible est poreux sur toute sa surface, de sorte que le tuyau fournit du gaz sur au moins la plupart de, voire toute la hauteur de l'enceinte.
- les pores du au moins un tuyau flexible ont un diamètre d'entre 1 et 100µm.
- au moins certains des moyens pour injecter le gaz sont constitués par au moins un tuyau flexible positionné horizontalement à l'intérieur de l'enceinte, longeant le toit de l'enceinte.
- l'isolant solide est un isolant pulvérulent, ayant des dimensions de particules allant par exemple de 150 à 800 µm.
- une série de tuyaux flexibles sont disposés parallèlement les uns aux autres de façon verticale le long des parois de l'enceinte, de sorte qu'aucune partie de la paroi de l'enceinte ne se trouve de plus d'une distance minimale d'un tuyau.
- les moyens pour injecter le gaz sont constitués par au moins un tuyau qui pénètre dans l'isolant solide.
- l'au moins un tuyau est relié à des moyens pour faire circuler l'azote dans le tuyau d'en bas vers le haut.
- l'au moins un tuyau est fixé à l'intérieur d'une paroi verticale de l'enceinte.

Selon l'invention, il est également prévu un procédé de balayage selon la revendication 10.

On peut distribuer le gaz dans l'enceinte au moyen d'au moins un tuyau perforé passant dans l'isolation solide et longeant une paroi verticale de l'enceinte.

Eventuellement l'enceinte comprend plusieurs éléments à isoler et le procédé prévoit d'injecter du gaz à au moins une position verticalement au-dessus de chaque élément.

L'invention sera décrite en plus de détail en se référant aux figures, qui illustrent des enceintes isolées selon l'invention.

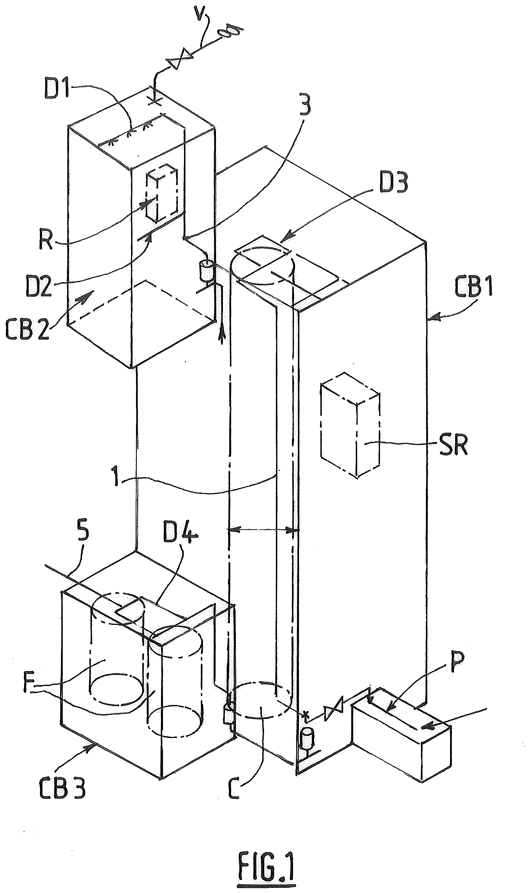

La Figure 1 montre un appareil de séparation d'air par distillation cryogénique comprenant trois enceintes isolées selon l'invention. Une double colonne C est disposée dans une première enceinte CB1, la colonne étant entourée de perlite. L'enceinte contient également un échangeur de chaleur SR. L'enceinte CB1 peut recevoir l'ajout de caissons de liaison vers des pompes ou des turbines P. Une colonne de séparation d'argon surmontée d'un condenseur de tête R est disposée dans un deuxième enceinte CB2, isolée avec de la perlite. Une troisième enceinte CB3 contient des filtres F.

Le système de ventilation à l'azote comprend un équipement d'injection de débit composé d'une vanne d'isolement ou de réglage, d'un débitmètre à flotteur, d'une soupape (si la pression d'alimentation est > 1 bar).

L'azote circule dans des tuyaux d'alimentation verticaux 1 non-perforés et non-poreux. Au-dessus de la colonne C l'azote est déversé dans une rampe de distribution perforée D3, constituée par des tuyaux horizontaux pliés en carrés disposée juste au-dessus de la colonne C. Les rampes sont constituées de tubes perforés. Les perforations formées dans les tubes ont un diamètre de 6 mm et sont percées tous les 100 mm environ et ensuite recouvertes de tissu de verre si l'isolant est de la perlite. Les rampes de distribution, ainsi que les tuyauteries d'alimentation, sont réalisées en tubes en acier selon les classes de tuyauteries, et assemblés par tronçons rectilignes soudés en onglet à 45°. La rampe, de forme carrée, est placée directement au-dessus du dôme de la colonne, de sorte que l'azote rentre dans l'isolation juste au-dessus de la colonne. Le support s'effectue à partir de l'ossature d'enveloppe, en toiture de l'enceinte CB1.

L'azote est donc injecté uniquement par en haut de l'enceinte. Au contact des surfaces froides des tuyaux, échangeurs de chaleur et/ou colonnes, il devient plus dense et descend. Arrivé en bas de l'enceinte, en rejoignant les parois de la structure, il se réchauffe et remonte créant ainsi des courants de convection du haut vers le bas et le haut et le bas. Ceci assure une circulation d'azote à l'intérieur de la boîte froide.

Pour la deuxième enceinte CB2, des distributeurs D1, D2 en forme de tuyau horizontal perforé distribuent l'azote au-dessus du condenseur R et de la colonne (non-illustrée).

Pour la troisième enceinte CB3, une rampe perforée formé par au moins un tuyau métallique perforé est disposée au-dessus des filtres F, qui servent à filtrer l'oxygène liquide produit par la colonne C. La rampe est alimentée à partir d'un tuyau 5 non-perforé et non-poreux. Ceci est également le cas pour les caissons de liaison vers pompes et turbines P

Pour le cas où une enceinte contient un échangeur, par exemple un échangeur à plaque et à ailettes en aluminium brasé, l'azote est déversé directement au-dessus du bout chaud de l'échangeur de chaleur.

L'azote provient de la colonne C elle-même et sort de la colonne et est chauffé jusqu'à la température ambiante avant d'être renvoyé au circuit de gaz de balayage à cette température. L'azote sera ensuite refroidi par son passage à travers l'isolant de la température ambiante jusqu'à la température d'opération de la colonne C. En alternatif, l'azote peut provenir d'un stockage ou d'un réseau existant, par exemple pour les phases de démarrage.

Comme l'enceinte est étanche à l'air, l'azote sort de l'enceinte par une conduite V et est envoyé à l'air.

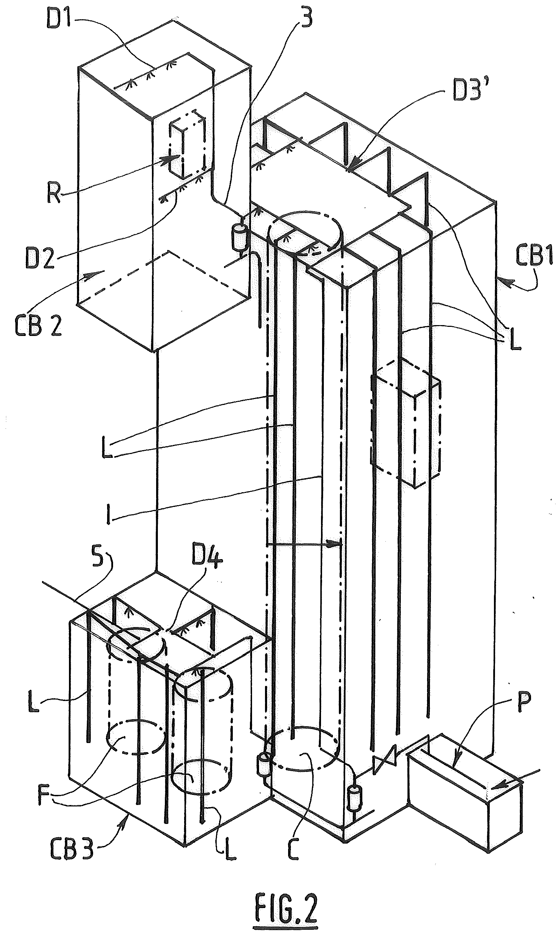

La Figure 2 présente des enceintes isolées perfectionnées par rapport à celles de la Figure 1. Le système de la Figure 1 présente quelques défauts en termes de coûts et de délai d'installation.

Le coût de ce système de balayage ne se réduit pas uniquement au coût des matériels (vanne, débitmètre à flotteur, tuyauteries en acier,...) mais au contraire, comprend le coût de fabrication et d'installation d'un tel système.

A titre d'exemple, pour un appareil de taille moyenne (1600 t/jr d'oxygène), le coût est d'environ de 10 k€ pour la boîte froide de la colonne de distillation d'un diamètre de 3,5 mètres et d'une hauteur de 52 mètres.

Le délai de préfabrication et d'installation sur site d'un tel système est également assez long et peut représenter une vraie contrainte par rapport à la réalisation finale d'une unité de séparation des gaz de l'air (ASU). A titre d'exemple, le délai pour un appareil de taille moyenne (1600 t/jr d'oxygène), est de 2 semaines.

L'efficacité du système de la Figure 1 en termes de balayage au sein de l'ensemble de l'isolant présent dans la boîte froide est assez réduite du fait que l'injection de l'azote gazeux s'effectue à une seule extrémité de la boîte froide et qu'il doit parcourir une grande distance à travers également une grande section. De plus, l'isolant installé dans la boîte froide est plus ou moins compacté (dense) en fonction des zones dans laquelle il se situe dans la boîte froide et présente donc des pertes de charges différentes d'un endroit à l'autre, créant ainsi des chemins préférentiels où il y a beaucoup de débit d'azote et d'autres où il y en a très peu, voire pas du tout.

Certaines zones ne sont donc pas balayées à l'azote gazeux ou ne sont pas suffisamment balayées.

Selon la variante de la Figure 2, une partie de l'azote de balayage est distribuée par les mêmes moyens que pour la Figure 1. Les moyens D1, D2, D3, D4 continuent à distribuer de l'azote au-dessus des éléments fonctionnant aux températures les plus froides et sont alimentés directement par des tuyaux 1, 3,5 en métal qui sont rigides. Pour assurer une meilleure distribution de l'azote, une autre partie de l'azote de balayage est fournie par un réseau d'au moins un tuyau flexible poreux, de préférence du commerce. Cet au moins un tuyau flexible L peut être positionné de façon verticale le long des parois de la boite froide, assurant ainsi une distribution homogène d'azote sur toute la hauteur et la section de la boîte froide.

De préférence une série de tuyaux flexibles sont disposés parallèlement les uns aux autres de sorte qu'aucune partie de la paroi de l'enceinte ne se trouve de plus d'une distance minimale d'un tuyau. Dans l'exemple, trois tuyaux flexibles L sont disposés le long d'un mur intérieur de la paroi de l'enceinte et peuvent être fixés à celle-ci. Les tuyaux peuvent être alimentés de sorte que l'azote descend d'en haut de l'enceinte vers le bas de l'enceinte. Soit le tuyau est fermé vers le bas, de sorte que tout l'azote traverse la paroi du tuyau ou remonte dans le tuyau. Sinon le tuyau peut faire partie d'un réseau.

Comme le tuyau flexible L est poreux, par exemple ayant une porosité de 5%, ce qui veut dire que 5% de la surface est composé de pores ouvertes, et a une longueur au moins égale à la moitié de la hauteur de l'enceinte, voire a substantiellement la même longueur que la hauteur de l'enceinte, toute la paroi intérieure de l'enceinte se trouve balayée en permanence avec de l'azote.

Les tuyaux flexibles seront assemblés de préférence au moyen de raccords du commerce (tés, bouchons, coudes, réductions ou vannes).

Les tuyaux poreux peuvent être en polyéthylène, en polyvinyle de chlorure, en agglomérat de particules de caoutchouc. L'usage de ce genre de matériau est rendu possible par le fait qu'ils sont entourés par le gaz de balayage riche en azote.

Les tuyaux poreux ont un diamètre interne allant, par exemple, de 10 à 16mm.

Dans certains cas, le matériau du tuyau poreux ne peut être utilisé à la température la plus basse observée à l'intérieur de l'enceinte. Dans ce cas, le tuyau poreux ne sera utilisé que dans les parties de l'enceinte où la température est au-dessus d'un seuil, par exemple -100°C, ou -50°C. Dans les parties de l'enceinte où la température en dessous de ce seuil, seuls des moyens de distribution utilisables à basse température, par exemple les tuyaux rigides métalliques, seront employés. Evidemment les tuyaux métalliques peuvent également être présents dans des parties de l'enceinte où la température est au-dessus du seuil.

Ainsi on voit à la figure 2, que les tuyaux poreux L ont une partie verticale longeant la paroi verticale de l'enceinte et une partie horizontale.

La rampe de tuyaux rigides métalliques D1, D2, D3, D4, de forme carrée, sera installée au sommet des équipements contenus dans la boîte froide comme précédemment. Le rideau de tuyau poreux L pourra pendre du sommet de la rampe carrée et être fixé si besoin sur les parois verticales intérieures de la boîte froide. La rampe de tuyaux installée au sommet des équipements peut également être composée de tuyaux poreux. Cette rampe peut être de forme carré, en étoile, etc.

L'azote de balayage peut être fourni par un circuit de tuyaux rigides indépendant du circuit de tuyaux souples. Sinon le réseau de tuyaux souples peut être relié au réseau de tuyaux rigides.

L'intérêt principal est d'assurer une répartition homogène de la distribution en azote gazeux dans l'enveloppe de la boîte froide par un système simple peu coûteux et rapide à mettre en place. Le prix public de ces tuyaux poreux est seulement de 42 € les 50 mètres linéaire (pour un tuyau poreux 16 mm x 22m, pour micro irrigation arrosage automatique). Ce tarif devrait en plus être nettement moins cher pour les industriels et pour des quantités plus importantes. De plus la porosité du tuyau permet de l'installer directement dans la perlite sans que celle-ci ne pénètre à l'intérieur des tuyaux et pouvant ainsi poser des problèmes de bouchage.

L'utilisation de ces tuyaux poreux permet également :
- De réduire le coût du système actuel en s'affranchissant de la phase de perçage de la rampe carrée par des trous de diamètre de 6mm tous les 100mm.
- De réduire le temps d'installation (plus de coupes biaises à réaliser sur la rampe de distribution, plus de soudures, plus de nécessité d'emmailloter la rampe de distribution carrée quand celle-ci se trouve dans la perlite).
- De réduire le poids de la boîte froide quand celle-ci est en paquet. Le poids du tuyau micro poreux est d'environ 100 g par mètre linéaire, comparé à du tuyau en acier qui est de 2.5 kg par mètre linéaire.

Dans l'exemple de la Figure 2, seule l'enceinte CB1 comprend des tuyaux poreux verticaux mais il est clair que cette disposition pourrait être déployée dans chacune des enceintes.

L'invention s'applique à toute enceinte isolée thermiquement nécessitant un système de balayage à l'azote gazeux et en particulier les enceintes isolées permettant de limiter les échanges de chaleur entre le milieu extérieur et les différents équipements industriels cryogéniques (colonnes de distillation, échangeurs de chaleur) des unités de séparation d'air ou de mélange ayant pour composants principaux de l'azote et/ou de l'hydrogène et/ou du monoxyde de carbone et/ou du dioxyde de carbone et/ou du méthane.

Il sera compris que si l'invention est illustrée par apport à un appareil de séparation à double colonne avec production d'argon et d'oxygène sous forme liquide, il est clair que l'invention s'applique une enceinte faisant partie d'un appareil de séparation d'air à simple colonne ou sans production d'argon ou sans production d'oxygène.

L'invention s'applique à des enceintes refermant des colonnes de distillation ou de lavage de mélanges autres que l'air pour lesquelles la séparation s'effectue à des températures subambiantes, tels que des gaz de synthèse contenant de l'hydrogène et/ou du monoxyde de carbone ou d'autres mélanges contenant du méthane et/ou du dioxyde de carbone et/ou du monoxyde de carbone et/ou de l'azote et/ou de l'oxygène et/ou de l'hydrogène.

## Revendications

1. Enceinte isolée (CB1, CB2, CB3) comprenant au moins un élément à isoler (C, R, F) susceptible de fonctionner à une température subambiante, voire cryogénique, l'élément étant un stockage ou une colonne de distillation (C) ou de lavage contenant des moyens permettant un échange de chaleur et de matière ou un échangeur de chaleur ou un vaporiseur-condenseur (R) ou un tuyau métallique ou un filtre (F), l'espace autour de l'élément ou des éléments étant rempli d'isolation solide et des moyens pour injecter un gaz contenant au moins 95% mol d'azote dans l'isolation, dans lequel au moins certains des moyens (D1, D3, D3', D4) pour injecter le gaz dans l'isolation débouchent dans de l'isolation disposée à une position verticalement au-dessus d'au moins un élément à isoler, de sorte que le gaz puisse s'épancher à un endroit verticalement au-dessus de l'élément à isoler **caractérisée en ce que** les moyens pour injecter le gaz longent l'intérieur d'au moins une paroi verticale de l'enceinte.

2. Enceinte selon la revendication 1 dans laquelle les moyens pour injecter un gaz sont constitués par au moins un tuyau perforé rigide (D1, D3, D3', D4).

3. Enceinte selon la revendication précédente dans laquelle au moins certains des moyens pour injecter le gaz sont constitués par au moins un tuyau poreux (L) positionné verticalement à l'intérieur de l'enceinte, ayant une longueur égale à au moins la moitié de la hauteur de l'enceinte, voire ayant une longueur substantiellement égale à la hauteur de l'enceinte, le tuyau étant perforé, éventuellement tout tuyau poreux étant disposé uniquement dans une partie de l'enceinte susceptible d' opérer à une température au-dessus d'un seuil, le seuil étant plus élevé que la température minimale de l'enceinte (CB1) le seuil pouvant être - 100°C, voire -50°C.

4. Enceinte selon la revendication 3 dans laquelle certains des moyens pour injecter le gaz sont constitués par au moins un tuyau perforé rigide en métal (D1, D3, D3', D4) et dans lequel les moyens pour injecter le gaz composé d'au moins un tuyau perforé rigide sont disposés au moins dans une partie de l'enceinte devant opérer à une température en dessous du seuil.

5. Enceinte selon la revendication 1 dans lequel une série de tuyaux flexibles sont disposés parallèlement les uns aux autres de façon verticale le long des parois de l'enceinte, de sorte qu'aucune partie de la paroi de l'enceinte ne se trouve de plus d'une distance minimale d'un tuyau.

6. Enceinte selon l'une des revendications précédentes dans laquelle au moins certains des moyens pour injecter le gaz sont constitués par au moins un tuyau flexible positionné horizontalement à l'intérieur de l'enceinte (CB1, CB2, CB3), longeant le toit de l'enceinte.

7. Enceinte selon l'une des revendications précédentes dans laquelle les moyens pour injecter le gaz sont constitués par au moins un tuyau qui pénètre dans l'isolant solide.

8. Enceinte selon la revendication 7 dans laquelle l'au moins un tuyau est relié à des moyens pour faire circuler l'azote dans le tuyau d'en bas vers le haut.

9. Enceinte selon la revendication 8 dans laquelle l'au moins un tuyau est fixé à l'intérieur d'une paroi verticale de l'enceinte.

10. Procédé de balayage d'une enceinte isolée (CB1, CB2, CB3) ayant plusieurs parois et étant substantiellement étanche à l'air, à l'intérieur de l'enceinte au moins un élément (C, R, F) devant fonctionner à une température subambiante, voire cryogénique, l'espace à l'intérieur de l'enceinte autour de l'élément ou des éléments étant rempli d'isolation solide dans lequel on injecte un gaz contenant au moins 95% mol d'azote dans l'isolation de sorte que le gaz est injecté dans l'isolation à au moins une position verticalement au-dessus d'au moins un élément à isoler de sorte que le gaz s'épanche à un endroit verticalement au-dessus de l'élément à isoler caractérisé ce que l'on distribue le gaz dans l'enceinte au moyen d'au moins un tuyau passant dans l'isolation solide et longeant une paroi verticale de l'enceinte.

11. Procédé selon la revendication 10 dans lequel l'au moins un tuyau est perforé.

## Patentansprüche

1. Isoliertes Gefäß (CB1, CB2, CB3), umfassend mindestens ein zu isolierendes Element (C, R, F), das imstande ist, bei einer Temperatur unterhalb der Umgebungstemperatur, sogar kryogenen Temperatur, zu funktionieren, wobei das Element ein Speicher oder eine Destillations- (C) oder Waschkolonne ist, die Mittel enthält, die einen Wärme- und Materialaustausch ermöglichen, oder einen Wärmeaustauscher oder einen Verdampfer-Kondensator (R) oder ein Metallrohr oder einen Filter (F), wobei der Raum rund um das Element oder die Elemente gefüllt ist mit fester Isolierung und Mitteln zum Einspritzen eines Gases, das mindestens 95% mol Stickstoff enthält, in die Isolierung, wobei mindestens einige der Mittel (D1, D3, D3', D4) zum Einspritzen des Gases in die Isolierung in die Isolierung münden, die an einer Position vertikal über mindestens einem zu isolierenden Element angeordnet ist, sodass das Gas an einer Stelle vertikal über dem zu isolierenden Element austreten kann, **dadurch gekennzeichnet, dass** die Mittel zum Einspritzen des Gases am Inneren von mindestens einer vertikalen Wand des Gefäßes entlanglaufen.

2. Gefäß nach Anspruch 1, wobei die Mittel zum Einspritzen eines Gases von mindestens einem starren, perforierten Rohr (D1, D3, D3', D4) gebildet werden.

3. Gefäß nach dem vorstehenden Anspruch, wobei mindestens einige der Mittel zum Einspritzen des Gases von mindestens einem porösen Rohr (L) gebildet werden, das vertikal im Inneren des Gefäßes angeordnet ist, das eine Länge aufweist, die gleich ist wie mindestens die Hälfte der Höhe des Gefäßes, das sogar eine Länge aufweist, die im Wesentlichen gleich ist wie die Höhe des Gefäßes, wobei das Rohr perforiert ist, wobei eventuell das ganze poröse Rohr ausschließlich in einem Teil des Gefäßes angeordnet ist, der imstande ist, bei einer Temperatur über einem Grenzwert zu arbeiten, wobei der Grenzwert höher ist als die minimale Temperatur des Gefäßes (CB1), wobei der Grenzwert -100 °C, sogar -50 °C, betragen kann.

4. Gefäß nach Anspruch 3, wobei einige der Mittel zum Einspritzen des Gases von mindestens einem starren, perforierten Rohr aus Metall (D1, D3, D3', D4) gebildet werden und wobei die Mittel zum Einspritzen des Gases, die aus mindestens einem starren, perforierten Rohr bestehen, mindestens in einem Teil des Gefäßes angeordnet sind, der bei einer Temperatur unter dem Grenzwert arbeiten muss.

5. Gefäß nach Anspruch 1, wobei eine Reihe von flexiblen Rohren parallel zueinander in vertikaler Weise entlang der Wände des Gefäßes angeordnet ist, sodass kein Teil der Wand des Gefäßes mehr als minimal von einem Rohr beabstandet ist.

6. Gefäß nach einem der vorstehenden Ansprüche, wobei mindestens einige der Mittel zum Einspritzen des Gases von mindestens einem flexiblen Rohr gebildet werden, das horizontal im Inneren des Gefäßes (CB1, CB2, CB3), das Dach des Gefäßes entlanglaufend, angeordnet ist.

7. Gefäß nach einem der vorstehenden Ansprüche, wobei die Mittel zum Einspritzen des Gases von mindestens einem Rohr gebildet werden, das in den festen Isolierstoff eindringt.

8. Gefäß nach Anspruch 7, wobei das mindestens eine Rohr mit Mitteln verbunden ist, um den Stickstoff im Rohr von unten nach oben zirkulieren zu lassen.

9. Gefäß nach Anspruch 8, wobei das mindestens eine Rohr im Inneren einer vertikalen Wand des Gefäßes befestigt ist.

10. Verfahren zum Spülen eines isolierten Gefäßes (CB1, CB2, CB3), das mehrere Wände aufweist und im Wesentlichen luftdicht ist, wobei im Inneren des Gefäßes mindestens ein Element (C, R, F) bei einer Temperatur unterhalb der Umgebungstemperatur, sogar kryogenen Temperatur, funktionieren muss, wobei der Raum im Inneren des Gefäßes rund um das Element oder die Elemente mit fester Isolierung gefüllt ist, wobei ein Gas, das mindestens 95 % mol Stickstoff enthält, in die Isolierung eingespritzt wird, sodass das Gas in die Isolierung an mindestens einer Position vertikal über mindestens einem zu isolierenden Element eingespritzt wird, sodass das Gas an einer Stelle vertikal über dem zu isolierenden Element austritt, **dadurch gekennzeichnet, dass** das Gas in dem Gefäß mittels mindestens eines Rohres verteilt wird, das in der festen Isolierung verläuft und an einer vertikalen Wand des Gefäßes entlangläuft.

11. Verfahren nach Anspruch 10, wobei das mindestens eine Rohr perforiert ist.

## Claims

1. Insulated enclosure (CB1, CB2, CB3) comprising at least one element to insulate (C, R, F) that may function at sub-ambient temperature, even a cryogenic temperature, the element being a storage or a distillation (C) or washing column containing means making it possible for an exchange of heat and of material or an exchange of heat or a vaporiser-condenser (R) or a metal pipe or a filter (F), with the space around the element or elements being filled with solid insulation and means for injecting a gas containing at least 95% mol of nitrogen in the insulation, wherein at least some of the means (D1, D3, D3', D4) for injecting gas into the insulation open in the insulation arranged at a position vertically above at least one element to insulate, such that the gas can vent to a location vertically above the element to insulate, **characterised in that** the gas-injection means run along the inside of at least one vertical wall of the enclosure.

2. Enclosure according to claim 1, wherein the gas-injection means are comprised of at least one rigid perforated pipe (D1, D3, D3', D4).

3. Enclosure according to the preceding claim, wherein at least some of the gas-injection means are comprised of at least one porous pipe (L) positioned vertically inside the enclosure, having a length equal to at least half the height of the enclosure, even having a length substantially equal to the height of the enclosure, with the pipe being perforated, with optionally any porous pipe being arranged only in a portion of the enclosure that can operate at a temperature above a threshold, with the threshold being higher than the minimum temperature of the enclosure (CB1) the threshold being able to be -100°C, even -50°C.

4. Enclosure according to claim 3, wherein some of the gas-injection means are comprised of one metal rigid perforated pipe (D1, D3, D3', D4) and wherein the gas-injection means comprised of at least one rigid perforated pipe are arranged at least in a portion of the enclosure that has to operate at a temperature below the threshold.

5. Enclosure according to claim 1, wherein a series of flexible pipes are arranged parallel to one another vertically along the walls of the enclosure, such that no portion of the wall of the enclosure is located more than a minimum distance from a pipe.

6. Enclosure according to one of the preceding claims, wherein at least some of the gas-injection means are comprised of at least one flexible pipe positioned horizontally inside the enclosure (CB1, CB2, CB3), running along the roof of the enclosure.

7. Enclosure according to one of the preceding claims, wherein the gas-injection means are comprised of at least one pipe that penetrates into the solid insulation.

8. Enclosure according to claim 7, wherein the at least one pipe is connected to means for circulating the nitrogen in the pipe from the bottom towards the top.

9. Enclosure according to claim 8, wherein the at least one pipe is fixed inside a vertical wall of the enclosure.

10. Method for sweeping an insulated enclosure (CB1, CB2, CB3) having several walls and being substantially airtight, inside the enclosure at least one element (C, R, F) that has to function at a sub-ambient temperature, even cryogenic temperature, with the space inside the enclosure around the element or elements being filled with solid insulation wherein a gas is injected containing at least 95% mol of nitrogen into the insulation such that the gas is injected into the insulation at at least one position vertically above at least one element to insulate such that the gas is vented to a location vertically above the element to insulate, **characterised in that** the gas is distributed in the enclosure by means of at least one pipe passing in the solid insulation and running along a vertical wall of the enclosure.

11. Method according to claim 10, wherein the at least one pipe is perforated.
